# EUROPEAN PATENT SPECIFICATION

(11) **EP 3 913 970 B1**
(45) Date of publication and mention of the grant of the patent: **18.02.2026**
(21) Application number: 20175844.8
(22) Date of filing: 20.05.2020
(51) Int. Cl.: H04W 36/00

(54) **TRANSMISSION OF HANDOVER INFORMATION IN HANDOVER REPORT**
ÜBERTRAGUNG EINER ÜBERGABEINFORMATION IN EINEM ÜBERGABEBERICHT
TRANSMISSION D'INFORMATION DE TRANSFERT DANS UN MESSAGE DE COMPTE-RENDU DE TRANSFERT

(43) Date of publication of application: 24.11.2021
(73) Proprietor: Nokia Technologies Oy, 02610 Espoo (FI)
(72) Inventor: Awada, Ahmad, 02610 ESPOO (FI); Balan, Irina, 02610 ESPOO (FI); Waldhauser, Richard, 02610 ESPOO (FI); Decarreau, Guillaume, 02610 ESPOO (FI); Viering, Ingo, 81549 MUNICH (DE)
(74) Representative: Script Intellectual Property LLP

(56) References cited:
- EP-A1- 2 810 469
- EP-A1- 3 611 963
- US-A1- 2013 316 713
- US-A1- 2019 110 237
- RAN3: "LS on introduction of handover type indication in UE RLF Report", vol. RAN WG3, no. Reno, USA; 20191118 - 20191122, 8 November 2019 (2019-11-08), XP051820682, Retrieved from the Internet <URL:https://ftp.3gpp.org/tsg_ran/WG3_Iu/TSGR3_106/Docs/R3-197029.zip R3-197029.docx> [retrieved on 20191108]
- "3rd Generation Partnership Project; Technical Specification Group Radio Access Network; Evolved Universal Terrestrial Radio Access (E-UTRA) and NR; Study on RAN-centric data collection and utilization for LTE and NR (Release 16)", 3GPP STANDARD; TECHNICAL REPORT; 3GPP TR 37.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 13 June 2019 (2019-06-13), pages 1 - 35, XP051754099
- ERICSSON: "SON Scope and Requirements for Rel.17", vol. RAN WG2, no. Electronic meeting; 20200817 - 20200828, 6 August 2020 (2020-08-06), XP051911102, Retrieved from the Internet <URL:https://ftp.3gpp.org/tsg_ran/WG2_RL2/TSGR2_111-e/Docs/R2-2007661.zip R2-2007661 - SON Scope and Requirements for Rel 17.docx> [retrieved on 20200806]
- CHINA TELECOM: "Discussion on Mobility Enhancement Optimization", vol. RAN WG3, no. Online; 20200817 - 20200828, 6 August 2020 (2020-08-06), XP051911289, Retrieved from the Internet <URL:https://ftp.3gpp.org/tsg_ran/WG3_Iu/TSGR3_109-e/Docs/R3-204899.zip R3-204899 Discussion on Mobility Enhancement Optimization-CT.doc> [retrieved on 20200806]
- CATT: "Necessity of Handover Type Indication in RLF Report", vol. RAN WG3, no. Reno, USA; 20191118 - 20191122, 8 November 2019 (2019-11-08), XP051820681, Retrieved from the Internet <URL:https://ftp.3gpp.org/tsg_ran/WG3_Iu/TSGR3_106/Docs/R3-197028.zip R3-197028.docx> [retrieved on 20191108]

## Description

### Field of the Disclosure

Various example embodiments relate to an apparatus comprising at least one processor.

Further embodiments relate to a method of operating related to such apparatus.

### Background

Wireless communications systems may e.g. be used for wireless exchange of information between two or more entities such as a user equipment and a network node, e.g. base station.

Handover procedures may be used e.g. in wireless communication systems for user equipment changing from a currently serving cell provided by a source node to a new cell provided by a target node.

US2019110237 A1 discloses a method and apparatus for supporting handovers in a wireless communication system as known in the art. The method comprises sending a message containing the handover purpose from the target node to the source node after radio link failure.

"LS on introduction of handover type indication in UE RLF Report", 3GPP DRAFT, R3-197029 proposes including a handover type indication in a radio link failure report message.

"Necessity of Handover Type Indication in RLF Report", 3GPP DRAFT, R3-197028 proposes including a handover type indication in a radio link failure report message. EP3611963 A1 discloses a method and an apparatus for cell handover and user equipment. EP2810469 A1 discloses improvements for evaluating handover failures. US2013/316713 A1 discloses a method for detecting cause of radio link failure or handover failure.

### Summary

The invention is defined by the independent claims. Preferred embodiments are given in the dependent claims.

### Brief description of the figures

- Fig. 1A: schematically depicts a simplified block diagram of an apparatus according to some embodiments,
- Fig. 1B: schematically depicts a simplified block diagram of an apparatus according to some embodiments,
- Fig. 1C: schematically depicts a simplified block diagram of an apparatus according to some embodiments,
- Fig. 2: schematically depicts a simplified block diagram of a system according to some embodiments,
- Fig. 3: schematically depicts a simplified flowchart according to some embodiments,
- Fig. 4, 5, 6, 7: each schematically depicts a simplified flow-chart according to some embodiments,
- Fig. 8: schematically depicts a simplified flow-chart according to some embodiments,
- Fig. 9: schematically depicts a simplified flow-chart according to some embodiments,
- Fig. 10: schematically depicts a simplified flow-chart according to some embodiments, and
- Fig. 11A, 11B, 11C: each schematically depicts a simplified block diagram according to some embodiments.

### Description of some embodiments

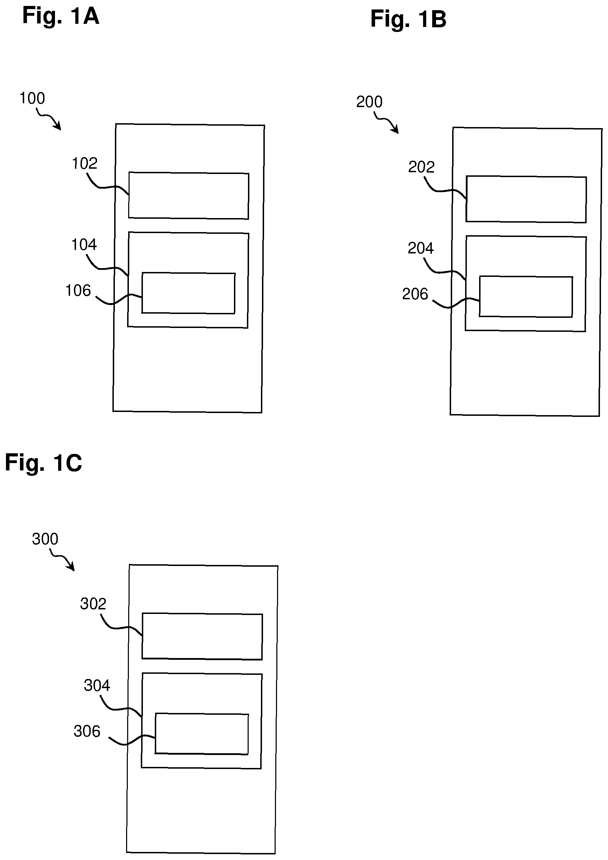

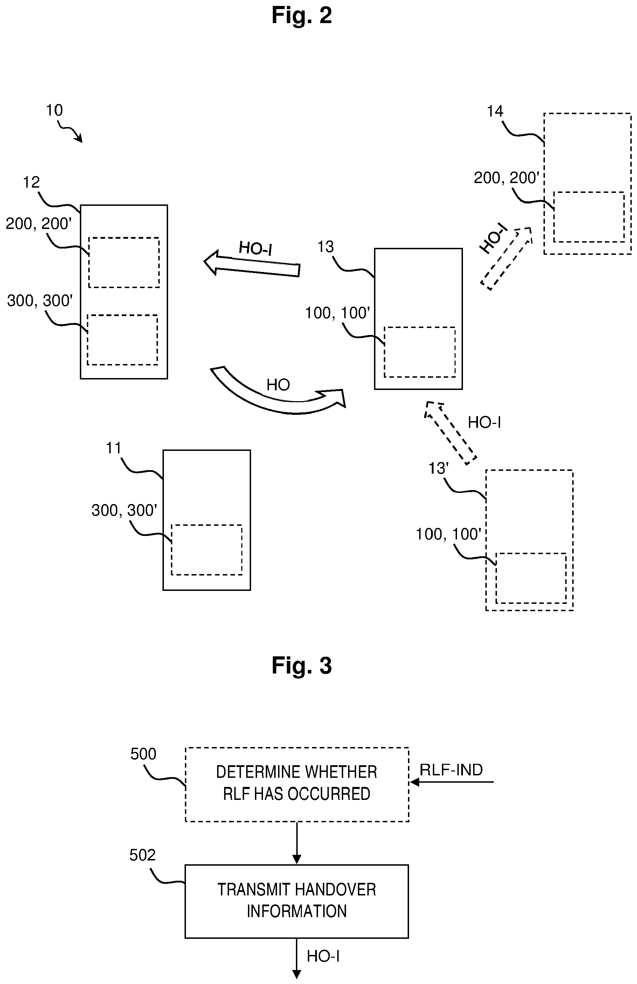

Some embodiments relate to an apparatus, e.g. for a wireless communications system. Fig. 1A schematically depicts a simplified block diagram of the apparatus 100 according to some embodiments, and Fig. 3 schematically depicts a simplified flow chart of a method of operating the apparatus 100 according to some embodiments. The apparatus 100 may e.g. be used within the wireless communications system 10 which is exemplarily depicted by Fig. 2.

In some embodiments, the wireless communications system 10 may comprise a first node 13, a second node 12, and a user equipment (UE) 11. In some embodiments, the first node 13 may be a target node of a handover HO of the UE 11, and the second node 12 may be a source node of the handover HO of the UE 11. In some embodiments, the wireless communications system 10 may further comprise at least one further node 13' and/or at least one further entity 14, which are explained in detail further below.

The apparatus 100 (Fig. 1A) comprises at least one processor 102, and at least one memory 104 storing instructions 106 that, when executed by the at least one processor 102, cause the first node 13 (Fig. 2) to, cf. Fig. 3: transmit 502 a handover information HO-I, which characterizes a type of the handover HO (Fig. 2) performed by the UE 11 from the source node 12 to the target node 13, to at least one of: a) the source node 12, b) the target 13 node (e.g., in cases where the further node 13' is the first node, see further below), c) the further entity 14. Presently, Fig. 2 exemplarily depicts that the first node 13, which is the target node of the current handover HO of the UE 11, transmits the handover information HO-I to the second node 12, which is the source node of the current handover HO. In some embodiments, this may enable the communications system 10 or at least one of its components, presently e.g. the source node 12, to distinguish mobility failure events associated with different handover procedures and/or to provide separate mobility failure counters for different handover types, e.g. for each handover type. According to some embodiments, using the mobility failure counters for different handover types, e.g. for each handover type, the network or system 10 and/or a component 12 thereof, may adjust the mobility parameters associated with a specific handover procedure HO, whereby a reliability of the specific handover procedure HO may be increased in some embodiments.

In some embodiments, the apparatus 100 (Fig. 1A) or its functionality, respectively, may be provided in a network element or node of the communications systems, for example in the first node 13, which may e.g. be a base station, e.g. a gNodeB (gNB).

In some embodiments, the apparatus 100 according to the embodiments or its functionality, respectively, may be used for or within wireless communications systems 10, e.g. networks, based on or at least partially adhering to third generation partnership project, 3GPP, radio standards such as 4G E-UTRAN, 5G NR (fifth generation new radio) or other radio access technology. In some embodiments, the apparatus 100 according to the embodiments or its functionality, respectively, may be used for handover procedures HO of 5G NR-based communications systems 10.

According to some embodiments, the handover information HO-I, cf. Fig. 2, 3, may be provided within a handover report or handover report message transmitted by the first node 13, e.g. within a handover report message based on 3GPP TS 36.423, cf. e.g. V16.0.0 (2019-12), chapter 9.1.2.19.

According to some embodiments, an information element (IE), e.g. within the handover report message based on 3GPP TS 36.423, may be provided to carry the handover information HO-I. According to some embodiments, this IE may e.g. be indicated by one or more bits, e.g. two bits in some embodiments. According to some embodiments, the IE for carrying the handover information HO-I may be indicated using an ENUM (enumeration) data type.

According to some embodiments, the further entity 14 (Fig. 2), which may be provided with the handover information HO-I, may e.g. be a central or centralized entity 14, for example a trace collection entity 14, e.g. residing in the network or system 10.

According to some embodiments, the further entity 14 may be configured to perform mobility robustness optimization (MRO) procedures and/or machine learning (ML)-based optimization, e.g., based on the handover information HO-I, e.g. to improve a reliability of handovers HO performed by UE within the system 10.

According to some embodiments, an interface (not shown) as specified in 3GPP TS 32.441 and/or TS 32.442 and/or TS 32.421 may be used between a radio access network (RAN) and the further entity 14 (e.g., trace collection entity).

According to some embodiments, MRO procedures, which e.g. aim at reducing a number of connection failures, e.g. comprising of Radio Link Failure (RLF) and handover failures (HOFs), in the network or system 10, may be performed based on the handover information HO-I. According to some embodiments, MRO procedures may adjust one or more mobility parameters based on statistics that are collected from the network 10 and/or from UEs 11, the statistics e.g. comprising the handover type.

3GPP TS 32.425 [Section 4.3.1.3.3] and 3GPP TS 36.300 [22.4.2.2] distinguish between the following three types of failures that may be relevant for MRO according to some embodiments:
1. Too-late handover (TLH): An RLF occurs after a UE 11 has stayed for a long time period in a cell "A", as e.g. provided by the source node 12 of Fig. 2, and the UE 11 attempts to re-establish the radio link connection in a different cell "B", as e.g. provided by the target node 13;
2. Too-early handover (TEH): An RLF occurs shortly after a successful handover HO from a source cell "A" to a target cell "B", and the UE 11 attempts to re-establish the radio link connection in the source cell "A", e.g. with the source node 12;
3. Handover to wrong cell (HWC): An RLF occurs shortly after a successful handover HO from a source cell to "A" to target cell "B", and the UE 11 attempts to re-establish the radio link connection in a cell "C", as e.g. provided by the further node 13' of Fig. 2, other than the source cell "A" and the target cell "B".

5G NR Rel. 15 has specified a baseline handover (BHO) procedure which is similar to that defined for LTE system [TS 36.300]. In NR and LTE Rel. 16, new handover procedures are specified to improve mobility robustness or/and mobility interruption time:
- Conditional handover (CHO): CHO has been introduced to improve mainly mobility robustness, i.e., reduce connection failures. In BHO of NR Rel. 15, the UE will immediately access the target cell to complete the handover. Instead, in CHO, the UE will only access the target cell once an additional CHO execution condition expires (i.e. the HO preparation and execution phases are decoupled). The condition is typically configured, e.g. by the source node in HO Command. The advantage of the CHO is that the HO command can be sent very early, when the UE is still safe in the source cell, without risking the access in the target cell and the stability of its radio link, which in turn provides robustness.
- Dual Active Protocol Stack (DAPS) solution has been introduced in Rel. 16 to achieve 0 ms interruption time in downlink (DL) and close to 0 ms in uplink (UL). The steps of DAPS are summarized in R2-1904255, Report of [105#57] [LTE/feMOB] UE and network side impacts of single/dual protocol stacks, ZTE, 3GPP TSG RAN WG2 Meeting #105-bis, Xi'an, China, 8th-12th April 2019. Herein, each of the source and target cell has full layer 2 (L2) protocol stack with own security key for ciphering and deciphering of the Packet Data Convergence Protocol (PDCP) Service Data Units (SDUs). To avoid a hard handover causing service interruption, the UE should establish a new radio link with respect to the target cell before detaching the radio link of the source cell. That is for some time before releasing the source cell, the UE would be exchanging data with both source and target nodes.
- Combination of CHO and DAPS: In principle, both CHO and DAPS can be configured by the network to provide both robustness and interruption time reduction for the handover procedure. The combination of CHO and DAPS have been discussed but not specified in Rel. 16.

According to some embodiments, the handover type is one of the following elements: a) BHO, b) CHO, c) DAPS, d) a combination of CHO and DAPS. In other words, according to some embodiments, the first node 13 (Fig. 2) may notify at least one of the source node 12 of the handover HO and the further entity 14 such as e.g. a central entity, for example a trace collection entity e.g. residing in the network, about the type of handover used by the UE 11.

According to some embodiments, as mentioned above, an information element (IE) may be provided to carry the handover information HO-I. According to some embodiments, this IE may e.g. be indicated by one or more bits, e.g. two bits in some embodiments, wherein e.g. "00" indicates BHO, "01" indicates CHO, wherein "10" indicates DAPS, and wherein "11" indicates "CHO and DAPS".

According to some embodiments, as also already mentioned above, the IE for carrying the handover information HO-I may be indicated using an ENUM data type, e.g.: ENUM = {BHO, CHO, DAPS, CHO&DAPS}.

According to some embodiments, the instructions 106 (Fig. 1A), when executed by the at least one processor 102, further cause the first node 13 to transmit 502 (Fig. 3) the handover information HO-I upon a radio link failure (RLF) of the user equipment 11 that has occurred after the handover HO.

According to some embodiments, the first node 13 may be configured to determine 500 (Fig. 3) whether an RLF has occurred after the HO, e.g. within a predetermined time window after the HO, e.g. by receiving an RLF indication RLF-IND from another node.

According to some embodiments, the RLF indication RLF-IND may comprise the handover information HO-I.

According to some embodiments, the information about the handover type is available at the target node 13 as the UE 11 context is not deleted once it receives the RLF indication RLF-IND.

According to some embodiments, the first node 13 is the target node of the handover HO, as already mentioned above.

According to some embodiments, however, the first node is a further node 13', e.g. not the target node 13 of the handover HO. Insofar, according to some embodiments, the further node 13' may comprise the apparatus 100 or a respective functionality. According to some embodiments, the further node 13' may be a node the UE 11 (re-)connects to after experiencing an RLF after the handover HO from the source node 12 to the target node 13.

According to some embodiments, however, the first node is a (further) node to which the UE 11 re-establishes to or reconnects to after the RLF, or a node that fetches the RLF report from the UE 11.

According to some embodiments, it may happen that the node that fetches the RLF report is not the same as the one that the UE 11 re-establishes to or reconnects to. According to some embodiments, the node that the UE 11 re-establishes to or reconnects to may not fetch the RLF report even though it is available at the UE 11. According to some embodiments, some other node to which the UE 11 may connect to in the future may fetch the RLF report.

As an example, according to some embodiments, the UE 11 may complete a successful handover HO from a source cell A (or a source node 12 providing the source cell A, respectively) to a target cell B (or a target node 13 providing the target cell B, respectively). Shortly after, the UE 11 may detect an RLF and may re-establish a connection to source cell A or to a new cell C (e.g. provided by a further node, e.g. the further node 13' exemplarily mentioned above).

According to some embodiments, such an RLF may be classified as TEH/HWC if the RLF happened shortly after the handover HO from the source cell A (node 12) to the cell B (node 13) (e.g., within 3 seconds). Otherwise, this handover HO may be considered as a too-late-handover (TLH) from cell B (node 13) to cell C (node 13'). In the latter case, according to some embodiments, the failed cell B may be considered as the originator of the failure and may correct its configuration, and in the former case, it would be the source cell A (source node 12) of the previous handover HO.

As a further example, the 3GPP implementation related to this approach is described in the following:
- Upon re-establishing to cell A/or C, cell A/or C (or their respective nodes 12, 13') may fetch the RLF report from the UE 11 and may e.g. send an RLF indication [TS 36.423] (e.g. containing the RLF report if fetched) to the target cell B, also cf. the exemplary transmitting step 502 of Fig. 3.
- Upon receiving the RLF indication RLF-IND, the target cell or its node 13 may check the elapsed time between the last successful HO till the RLF:
   - If the RLF indication contains the RLF report, the elapsed time since last handover initialization till connection failure is recorded by the UE in "timeConnFailure-r10" information element (IE) which is part of the RLF report.
   - Otherwise, if the RLF report is not fetched (e.g. if the re-establishment is not successful), the target cell B may still estimate the elapsed time as it is aware of the time instant for last handover initialization based on the UE context which is still stored and can be identified with PCI/C-RNTI/ShortMAC-I from the re-establishment request. The uncertainty in the estimate is due to the fact that the network does not know exactly the time instant the UE has declared RLF (i.e., needs to compensate delay resulting from performing re-establishment, sending RLF indication, processing time at the gNB, etc.).
- If the elapsed time < threshold, target cell B may send a "Handover Report" [3GPP TS 36.423] to source cell A for indicating a TEH or HWC depending on whether the re-established cell is A or C, respectively, see "Handover Report Type" IE in the definition of the Handover Report message as provided in 3GPP TS 36.423. The source cell A may take appropriate action to improve its configuration. Otherwise, the target cell B/or network classifies the RLF as TLH from target cell B to re-established cell C.

As a further example, from the "Mobility Information" IE in the handover report (defined in 3GPP TS 36.423, cf. e.g. V16.0.0 (2019-12), chapter 9.1.2.19), the source cell A can check as well to which mobility group, e.g. (1) slow or fast UE or (2) UEs in different slices, etc.) the failed UE belongs to. According to some embodiments, the grouping is implementation specific and transparent to the target cell. The mobility information may be useful if source cell A applies different mobility parameters or strategy for different groups of UEs. The mobility information is included by source cell A in the handover request to target cell B which is then stored by target B with the UE context. Note that the source cell typically deletes the UE context after the handover is completed [TS 36.300].

Moreover, as a further example, from the "Handover Cause" IE of the Handover Report message, the source cell can know the handover cause which can be either "Handover Desirable for Radio Reasons", "Time Critical Handover", "Resource Optimization Handover", etc...[see 9.2.6 of TS 36.423].

Some embodiments may at least temporarily address at least one of the following aspects and/or issues: in case of TEH or HWC, the source cell or source node 12/ or further, e.g. central, entity 14 receiving the handover report may adjust the mobility parameters such that the handover may be triggered later. However, in 5G NR Rel. 16, the handover can be triggered either using BHO, CHO, DAPS, or CHO & DAPS, where each has its corresponding mobility parameters. Using the existing "Handover Report" message, the source cell/or further, e.g. central, entity can neither distinguish the mobility failure events associated with different handover procedures nor determine which mobility parameters to adjust if it is using more than one handover type for handing over connected UEs.

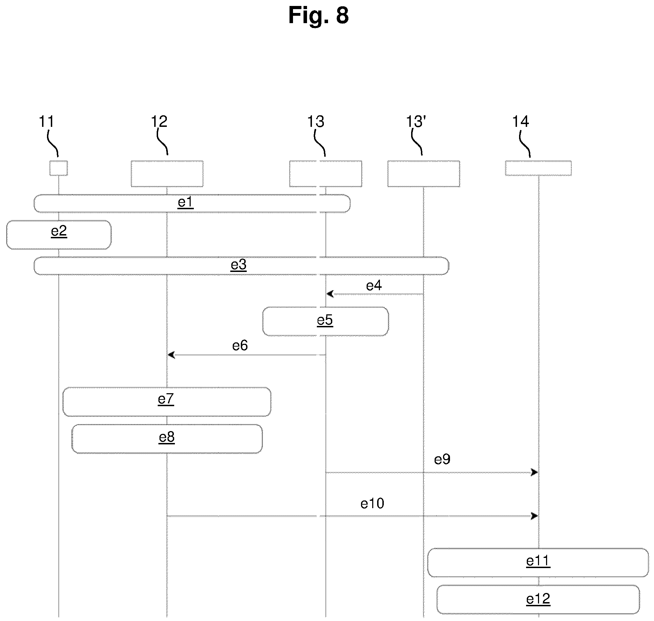

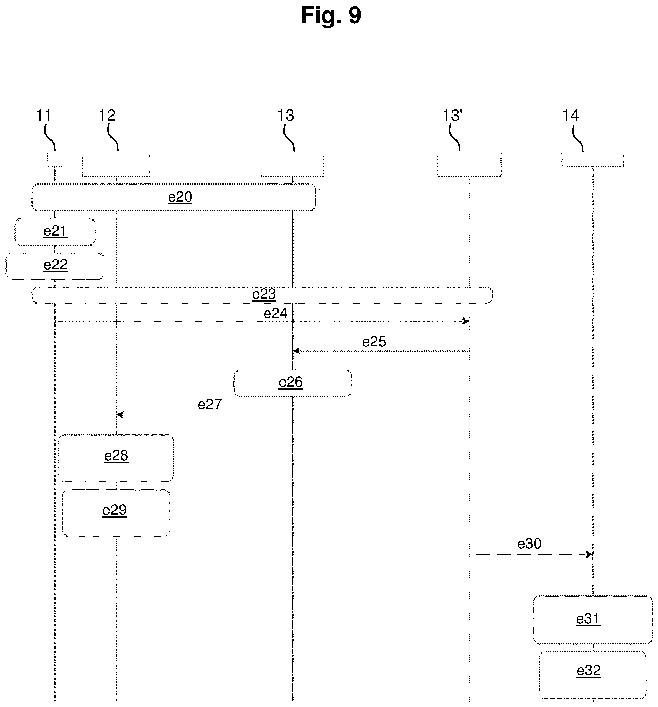

According to some embodiments, the instructions 106 (Fig. 1A), when executed by the at least one processor 102, further cause the first node 13 to receive the handover information HO-I. According to some embodiments, the first node 13 may receive the handover information HO-I from the user equipment 11, which is explained further below with reference to Fig. 8, 9.

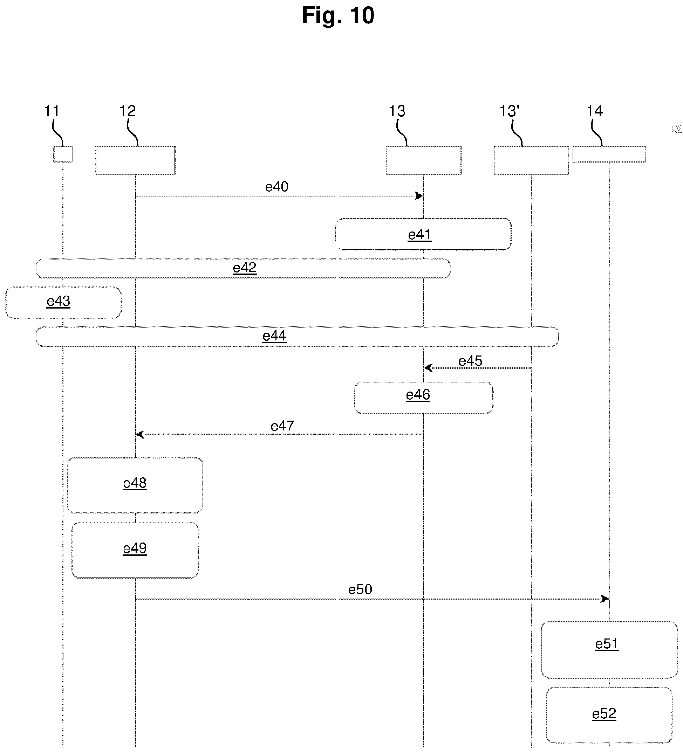

According to some embodiments, the first node 13 may receive the handover information HO-I from the source node 12 of the HO, which is explained further below with reference to Fig. 10.

Some embodiments relate to a method, cf. Fig. 3, comprising: transmitting 502, by the first node 13, 13', a handover information HO-I, which characterizes a type of a handover performed by a user equipment 11 from a source node 12 to a target node 13, to at least one of: a) the source node 12, b) the target node 13 (e.g., in cases where the further node 13' is the first node), c) a further entity 14.

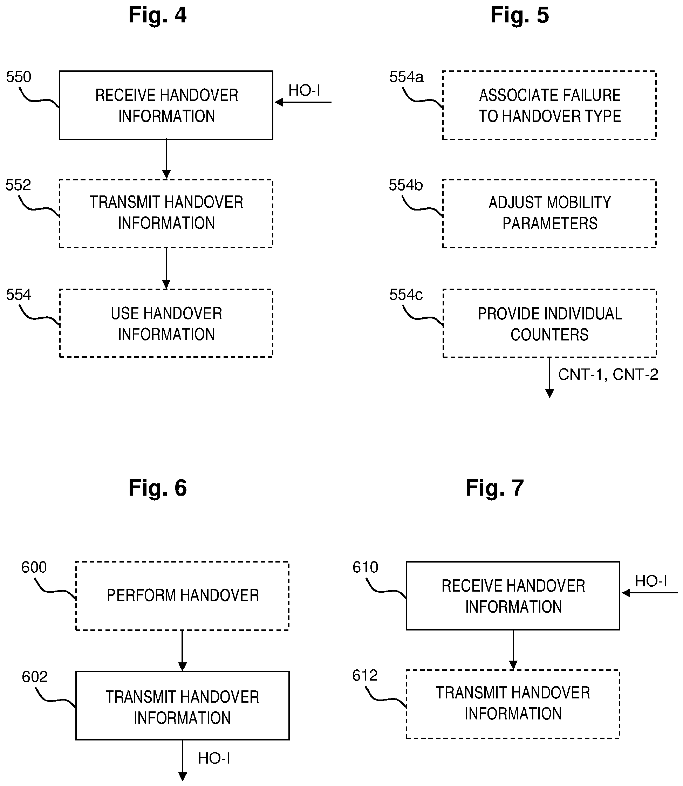

Some embodiments, cf. Fig. 1B, relate to an apparatus 200, comprising at least one processor 202, and at least one memory 204 storing instructions 206, the at least one memory 204 and the instructions 206 configured to, with the at least one processor 202, cause a second node 12 to receive 550 (cf. Fig. 4) a handover information HO-I, which characterizes a type of a handover performed by a user equipment 11 from a source node 12 to a target node 13.

According to some embodiments, the second node 12 is configured to receive the handover information HO-I from the first node 13, e.g. the target node of the HO, e.g. in form of a handover report message as exemplarily mentioned above.

According to some embodiments, the instructions 206, when executed by the at least one processor 202, further cause the second node 12 to transmit 552 (Fig. 4) the handover information HO-I to a or the further entity 14, e.g. central or centralized entity, e.g. a trace collection entity 14.

According to some embodiments, the instructions 206, when executed by the at least one processor 202, further cause the second node 12 to use 554 (Fig. 4) the received handover information HO-I for controlling an operation of at least the source node 12, wherein preferably using 554 the received handover information HO-I comprises at least one of, cf. Fig. 5: a) associate 554a a mobility failure event to a specific handover type (e.g., BHO, CHO, DAPS, combination of CHO and DAPS) indicated by the handover information HO-I, b) adjust 554b mobility parameters associated with a handover type indicated by the handover information HO-I, c) provide 554c individual counters CNT-1, CNT-2, .. for mobility failure events associated with different handover procedures having different handover types.

According to some embodiments, the second node is the source node 12 of the handover HO.

According to some embodiments, the second node is a or the further entity 14, e.g. central or centralized entity, e.g. a trace collection entity.

According to some embodiments, the apparatus 200 of Fig. 1B or its functionality, respectively, may e.g. be provided in at least one of the source node 12 (Fig. 2) and the further entity 14.

Some embodiments, cf. Fig. 4, relate to a method comprising: receiving 550, by a second node 12, 14', a handover information HO-I, which characterizes a type of a handover performed by a user equipment 11 from a source node to a target node.

Some embodiments, cf. Fig. 1C, relate to an apparatus 300, comprising at least one processor 302, and at least one memory 304 storing instructions 306, the at least one memory 304 and the instructions 306 configured to, with the at least one processor 302, cause a user equipment 11 to transmit a handover information HO-I, cf. step 602 of Fig. 6, which characterizes a type of a handover performed by the user equipment 11 from a source node 12 to a target node 13, to at least one further node 13'.

According to some embodiments, the UE 11 may transmit the handover information HO-I by means of an RLF report which the UE 11 may send after experiencing an RLF, e.g. after re-establishing or reconnecting to a new cell.

According to some embodiments, the UE may at least temporarily store the type of a handover, e.g. in the form of the handover information HO-I, e.g. upon executing a handover HO from a source node 12 to a target node 13.

In this regard, the optional step 600 of Fig. 6 collectively symbolizes at least one of the following steps that may be performed by the UE 11 according to some embodiments: a) performing a successful handover HO from a source node 12 (Fig. 2) to a target node 13, b) at least temporarily storing the handover information HO-I of the successful handover HO, c) detecting an RLF, e.g. shortly after the successful HO, d) performing a connection re-establishment, e.g. an RRC connection re-establishment, e.g. to a further node 13' or to the source node 12. As already mentioned above, according to some embodiments, after the optional step 600, the UE 11 may transmit the handover information HO-I to at least one further node 13', cf. step 602 of Fig. 6.

According to some embodiments, the transmitted handover information HO-I may be propagated back, e.g. from the further node 13' which has been provided with the handover information HO-I by the UE 11 according to some embodiments, e.g. by means of at least one of: a) an RLF indication (not shown in Fig. 6, explained in detail further below with reference to Fig. 9) comprising the handover information HO-I, said RLF indication being transmitted from the further node 13' (Fig. 2) to the target node 12, b) a handover report comprising the handover information HO-I, the handover report being transmitted from the target node 13 to the source node 12.

According to some embodiments, the UE 11 is configured to delete the stored type of handover and/or handover information HO-I, e.g. if at least one of the following conditions is satisfied: a) when the handover HO fails (e.g., if a timer expires, e.g. a T304 timer), b) when an RLF occurs before the handover HO is completed.

According to some embodiments, the UE 11 is configured to, after the completion of the handover HO, store (cf. step 600 of Fig. 6) the handover information HO-I, e.g. for a configurable amount of time. After expiry of this configurable amount of time, the UE 11 may delete the handover information HO-I.

Some embodiments relate to an apparatus 300, cf. Fig. 1C, comprising at least one processor 302, and at least one memory 304 storing instructions 306, the at least one memory 304 and the instructions 306 configured to, with the at least one processor 302, cause a source node 12 (Fig. 2) to transmit, cf. step 602 of Fig. 6, a handover information HO-I, which characterizes a type of a handover performed by the user equipment 11 from the source node 12 to a target node 13, to at least one further node, e.g. to the target node 13 and/or to the further entity 14.

According to some embodiments, the source node 12 may encode the type of handover, e.g. the handover information HO-I, as a part of the Mobility Information that is sent in a Handover Request (not shown in Fig. 6, cf. Fig. 9 for further details) to the target node 13. According to some embodiments, for instance, the two most significant bits of mobility information may be used to indicate the handover type or handover information HO-I, and the remaining 30 bits out of 32 bits may be used for UE grouping or other purpose.

According to some embodiments, upon receiving the mobility information comprising the handover information HO-I (and/or the serving beam information), the target node 13 may store it and may send it back to the source node 12, e.g. within a Handover Report, e.g. when it receives an RLF indication.

According to some embodiments, the apparatus 300 of Fig. 1C or its functionality, respectively, may e.g. be provided in at least one of the UE 11 (Fig. 2) and the source node 12.

Some embodiments, cf. Fig. 6, relate to a method comprising: transmitting 602, by a user equipment 11 (Fig. 2), a handover information HO-I, which characterizes a type of a handover HO performed by the user equipment 11 from a source node 12 to a target node 13, to at least one further node 13'.

Some embodiments, cf. Fig. 6, relate to a method comprising: transmitting 602, by a source node 12, a handover information HO-I, which characterizes a type of a handover HO performed by the user equipment 11 from the source node 12 to a target node 13, to at least one further node 13, 14.

Fig. 7 schematically depicts a simplified flow-chart according to some embodiments. In step 610, the first node 13, 13' receives the handover information HO-I, e.g. from the second node 12, e.g. source node 12. In the optional step 612, the first node 13, 13' transmits the handover information HO-I to at least one of: a) the source node 12, b) the target node 13 (e.g., in case of the first node being the further node 13'), c) the further entity 14.

Fig. 8 schematically depicts a simplified flow-chart according to some embodiments. The elements 11, 12, 13, 13', 14 of Fig. 8 correspond with the elements 11, 12, 13, 13', 14 of Fig. 2.

Element e1 of Fig. 8 symbolizes a successful handover HO of the UE 11 from the source node 12 (or its cell "A") to the target node 13 (or its cell "B"). Element e2 symbolizes that the UE 11 detects an RLF, e.g. shortly after the successful handover e1. Element e3 symbolizes an RRC (Connection) Re-establishment.

Element e4 symbolizes an RLF indication transmitted from the further node 13' to the target node 13 after the RRC (Connection) Re-establishment e3. Element e5 symbolizes that the target node 13 deems or determines that an RLF occurred, e.g. shortly after the handover e1, e.g. based on the RLF indication e4.

Element e6 symbolizes transmission of the handover information HO-I from the target node 13 to the source node 12, the handover information HO-I e.g. indicating the type of the handover e1. According to some embodiments, the handover information HO-I may be transmitted using a Handover Report message, as explained above.

Element e7 symbolizes a step, wherein the source node 12 associates a mobility failure event with a specific type of the handover e1. Element e8 symbolizes a step, wherein the source node 12 adjusts one or more mobility parameters associated with the handover type as indicated by the received handover information HO-I, e6. Element e9 symbolizes an optional transmission of the handover information HO-I from the target node 13 to the further, e.g. central, entity 14, e.g. in the form of a Handover Report message, as explained above.

Element e10 symbolizes the transmission of the handover information HO-I from the source node 12 to the further, e.g. central, entity 14, e.g. in the form of a Handover Report message, as explained above.

Element e11 symbolizes a step, similar to element e7, wherein the central entity 14 associates a mobility failure event with a specific type of the handover e1. Element e12 symbolizes a step, similar to element e8, wherein the central entity 14 adjusts one or more mobility parameters associated with the handover type as indicated by the received handover information HO-I, e6. According to some embodiments, the further node 13' may be the same as, i.e. identical with, the source node 12. In other words, according to some embodiments, the RRC Connection Re-establishment e3 may be performed with the source node 12, and not with the further node 13'.

Fig. 9 schematically depicts a simplified flow-chart according to some embodiments. The elements 11, 12, 13, 13', 14 of Fig. 9 correspond with the elements 11, 12, 13, 13', 14 of Fig. 2.

Element e20 of Fig. 9 symbolizes a successful handover HO of the UE 11 from the source node 12 (or its cell "A") to the target node 13 (or its cell "B"). Element e21 symbolizes that the UE 11 at least temporarily stores the type of the handover e20. Element e22 symbolizes that the UE detects an RLF, e.g. shortly after the successful handover e20. Element e23 symbolizes an RRC (Connection) Re-establishment, e.g. to the further node 13'.

Element e24 symbolizes an RLF report including the handover information HO-I transmitted from the UE 11 to the further node 13' after the RRC (Connection) Re-establishment e23. Element e25 symbolizes an RLF indication, e.g. RLF report, comprising the handover information HO-I, transmitted from the further node 13' to the target node 13. Element e26 symbolizes that the target node 13 deems or determines that an RLF occurred, e.g. shortly after the handover e20, e.g. based on the RLF indication e25.

Element e27 of Fig. 9, similar to element e6 of Fig. 8, symbolizes transmission of the handover information HO-I from the target node 13 to the source node 12, the handover information HO-I e.g. indicating the type of the handover e20. According to some embodiments, the handover information HO-I may be transmitted using a Handover Report message e27, as explained above.

Element e28 symbolizes an optional step, wherein the source node 12 associates a mobility failure event with a specific type of the handover e20. Element e29 symbolizes an optional step, wherein the source node 12 adjusts one or more mobility parameters associated with the handover type as indicated by the received handover information HO-I, e27.

Element e30 symbolizes an optional transmission of the handover information HO-I from the further node 13' to the further, e.g. central, entity 14, e.g. in the form of an RLF Report, as explained above.

Element e31 symbolizes an optional step, similar to element e28, wherein the central entity 14 associates a mobility failure event with a specific type of the handover e20. Element e32 symbolizes an optional step, similar to element e29, wherein the central entity 14 adjusts one or more mobility parameters associated with the handover type as indicated by the received handover information HO-I, e30.

According to some embodiments, the further node 13' may be the same as, i.e. identical with, the source node 12. In other words, according to some embodiments, the RRC Connection Re-establishment e23 may be performed with the source node 12, and not with the further node 13', which corresponds with an exemplary TEH case.

Fig. 10 schematically depicts a simplified flow-chart according to some embodiments. The elements 11, 12, 13, 13', 14 of Fig. 10 correspond with the elements 11, 12, 13, 13', 14 of Fig. 2.

Element e40 of Fig. 10 symbolizes a transmission of the handover information HO-I from the source node 12 to the target node 13, e.g. in the form of a Handover Request, in which the handover type is e.g. encoded as a part of Mobility Information, as already explained above.

Element e41 symbolizes that the target node 13 stores the handover type which it has received e.g. encoded as a part of the Mobility Information e40. Element e42 symbolizes a successful handover HO of the UE 11 from the source node 12 (or its cell "A") to the target node 13 (or its cell "B"). Element e43 symbolizes that the UE 11 detects an RLF, e.g. shortly after the successful handover e42. Element e44 symbolizes an RRC (Connection) Re-establishment, e.g. to the further node 13'.

Element e45 symbolizes an RLF indication transmitted from the further node 13' to the target node 13 after the RRC (Connection) Re-establishment e44. Element e46 symbolizes that the target node 13 deems or determines that an RLF occurred, e.g. shortly after the handover e42, e.g. based on the RLF indication e45.

Element e47 symbolizes a transmission of the handover information HO-I from the target node 13 to the source node 12, the handover information HO-I e.g. indicating the type of the handover e20. According to some embodiments, the handover information HO-I may be transmitted using a Handover Report message e47, as explained above.

Element e48 symbolizes an optional step, wherein the source node 12 associates a mobility failure event with a specific type of the handover e42. Element e49 symbolizes an optional step, wherein the source node 12 adjusts one or more mobility parameters associated with the handover type as indicated by the received handover information HO-I, e47.

Element e50 symbolizes an optional transmission of the handover information HO-I from the source node 12 to the further, e.g. central, entity 14, e.g. in the form of a Handover Report, as explained above.

Element e51 symbolizes an optional step, similar to element e48, wherein the central entity 14 associates a mobility failure event with a specific type of the handover e42. Element e52 symbolizes an optional step, similar to element e49, wherein the central entity 14 adjusts one or more mobility parameters associated with the handover type as indicated by the received handover information HO-I, e50.

According to some embodiments, the further node 13' may be the same as, i.e. identical with, the source node 12. In other words, according to some embodiments, the RRC Connection Re-establishment e44 may be performed with the source node 12, and not with the further node 13', which corresponds with an exemplary TEH case.

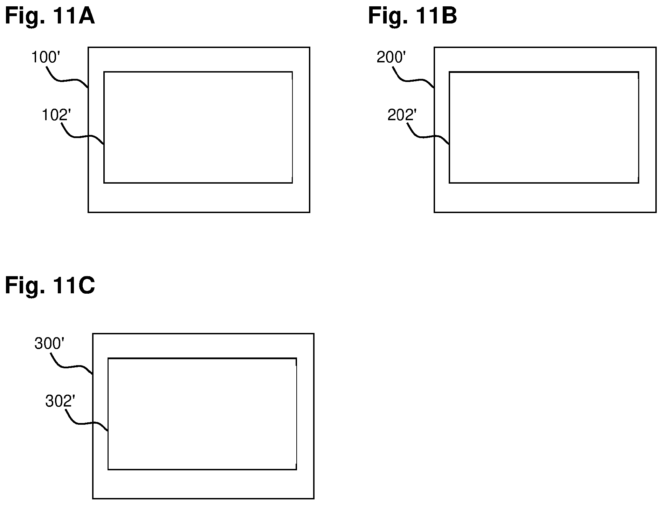

Some embodiments, cf. Fig. 11A, relate to an apparatus 100' comprising means 102' for causing a first node 13, 13' (Fig. 2) to transmit a handover information HO-I, which characterizes a type of a handover performed by a user equipment 11 from a source node 12 to a target node 13, to at least one of: a) the source node 12, b) the target node 13, c) a further entity 14.

According to some embodiments, the means 102' may be configured to cause the first node 13, 13' to perform at least one further step of the embodiments explained above.

According to some embodiments, the apparatus 100' of Fig. 11A or its functionality, respectively, may e.g. be provided in at least one of the target node 13 and the further node 13' (Fig. 2).

Some embodiments, cf. Fig. 11B, relate to an apparatus 200' comprising means 202' for causing a second node to receive a handover information, which characterizes a type of a handover performed by a user equipment from a source node to a target node.

According to some embodiments, the means 202' may be configured to cause the second node to perform at least one further step of the embodiments explained above.

According to some embodiments, the apparatus 200' of Fig. 11B or its functionality, respectively, may e.g. be provided in at least one of the source node 12 and the further entity 14 (Fig. 2).

Some embodiments, cf. Fig. 11C, relate to an apparatus 300' comprising means 302' for causing at least one of a) a user equipment 11, b) a source node 12 to transmit a handover information HO-I, which characterizes a type of a handover performed by the user equipment 11 from the source node 12 to the target node 13, to at least one further node 13'.

According to some embodiments, the means 302' may be configured to cause at least one of a) the user equipment 11, b) the source node 12 to perform at least one further step of the embodiments explained above.

Some embodiments relate to a communications system 10 (Fig. 2) comprising at least one apparatus 100, 100', 200, 200', 300, 300' according to the embodiments and, optionally, at least one UE 11.

Some embodiments relate to a use of the apparatus according to the embodiments and/or of the method according to the embodiments and/or of the system according to the embodiments for at least one of: a) transmitting the handover information HO-I to a source node of a handover, b) transmitting the handover information HO-I to a target node of a handover, c) transmitting the handover information HO-I to a further node 13', e.g. other than the source node 12 and the target node 13, d) distinguishing mobility failure events associated with different HO procedures, e) keeping separate counters for mobility failure events, e.g. associated with different HO procedures, f) identifying mobility parameters corresponding to a specific handover type, g) adjusting one or more mobility parameters based on the handover information HO-I.

Even though some embodiments have been described above with reference to an example according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiments. It will be obvious to a person skilled in the art that, as technology advances, the concept according to the embodiments can be implemented in various ways. Further, it is clear to a person skilled in the art that the described embodiments may, but are not required to, be combined with other embodiments in various ways.

## Claims

1. A target node (100, 13) for a 5G new radio, NR, wireless communications system (10), comprising at least one processor (102), and at least one memory (104) storing instructions (106), the at least one memory (104) and the instructions (106) configured to, with the at least one processor (102), cause said target node (13; 13') of the wireless communications system (10) to:
receive a handover information from a further node, said further node being a node of said 5G NR wireless communications system different to said target node and to which a user equipment connects to after experiencing a radio link failure;
deem or determine that a radio link failure occurred; and
transmit (502; 612) to a source node (12) of said 5G NR wireless communications system said handover information (HO-I) upon said radio link failure of the user equipment that has occurred after a handover from said source node (12) to said target node (13), said handover information characterizing a type of said handover (HO) performed by said user equipment (11) of the 5G NR wireless communications system (10), said type being one of: a baseline handover, a conditional handover, a dual active protocol stack handover, or a combination conditional and dual active protocol stack handover.

2. A source node (200, 12) for a 5G NR wireless communications system (10), comprising at least one processor (202), and at least one memory (204) storing instructions (206), the at least one memory (204) and the instructions (206) configured to, with the at least one processor (202), cause said source node (12) of the wireless communications system (10) to:
receive (550) from a target node (13) a handover information (HO-I), which characterizes a type of a handover (HO) performed by a user equipment (11) of the 5G NR wireless communications system (10) from said source node to the target node (13) of the 5G NR wireless communications system (10), said type being one of: a baseline handover, a conditional handover, a dual active protocol stack handover, or a combination conditional and dual active protocol stack handover;
use (554) the received handover information (HO-I) for controlling an operation of at least the source node (12), wherein using (554) the received handover information (HO-I) comprises:
a) associate (554a) a mobility failure event to a specific handover type indicated by the handover information (HO-I),
b) adjust (554b) mobility parameters associated with a handover type indicated by the handover information (HO-I); and
transmit said handover information to a central entity of said 5G NR wireless communications system.

3. A central entity (14) for a 5G NR wireless communications system (10), comprising at least one processor, and at least one memory storing instructions, the at least one memory and the instructions configured to, with the at least one processor, cause said central entity of the wireless communications system to:
receive a handover information (HO-I), which characterizes a type of a handover (HO) performed by a user equipment (11) of the 5G NR wireless communications system (10) from a source node to a target node (13) of the 5G NR wireless communications system (10), said type being one of: a baseline handover, a conditional handover, a dual active protocol stack handover, or a combination conditional and dual active protocol stack handover;
use the received handover information (HO-I), wherein using the received handover information (HO-I) comprises:
a) associate a mobility failure event to a specific handover type indicated by the handover information (HO-I),
b) adjust mobility parameters associated with a handover type indicated by the handover information (HO-I).

## Patentansprüche

1. Zielknoten (100, 13) für ein drahtloses 5G-NR-Kommunikationssystem (10), umfassend mindestens einen Prozessor (102) und mindestens einen Speicher (104), der Anweisungen (106) speichert, wobei der mindestens eine Speicher (104) und die Anweisungen (106) so konfiguriert sind, dass sie, mit dem mindestens einen Prozessor (102), den Zielknoten (13; 13') des drahtlosen Kommunikationssystems (10) veranlassen zum:
Empfangen einer Übergabeinformation von einem weiteren Knoten, wobei der weitere Knoten ein Knoten des drahtlosen 5G-NR-Kommunikationssystems ist, der sich von dem Zielknoten unterscheidet und mit dem sich ein Endgerät verbindet, nachdem ein Funkverbindungsausfall aufgetreten ist;
Erachten oder Feststellen, dass ein Funkverbindungsausfall aufgetreten ist, und
Übertragen (502; 612) der Übergabeinformation (handover information, HO-I) an einen Quellknoten (12) des drahtlosen 5G-NR-Kommunikationssystems nach dem Ausfall der Funkverbindung des Endgeräts, der nach einer Übergabe von dem Quellknoten (12) an den Zielknoten (13) aufgetreten ist, wobei die Übergabeinformation einen Typ der durch das Endgerät (11) des drahtlosen 5G-NR-Kommunikationssystems (10) durchgeführten Übergabe (handover, HO) charakterisiert, wobei der Typ einer der folgenden ist: eine Baseline-Übergabe, eine bedingte Übergabe, eine Dual-Active-Protocol-Stack-Übergabe oder eine Kombination aus bedingter und Dual-Active-Protocol-Stack-Übergabe.

2. Quellknoten (200, 12) für ein drahtloses 5G-NR-Kommunikationssystem (10), umfassend mindestens einen Prozessor (202) und mindestens einen Speicher (204), der Anweisungen (206) speichert, wobei der mindestens eine Speicher (204) und die Anweisungen (206) so konfiguriert sind, dass sie, mit dem mindestens einen Prozessor (202), den Quellknoten (12) des drahtlosen Kommunikationssystems (10) veranlassen zum:
Empfangen (550) einer Übergabeinformation (HO-I) von einem Zielknoten (13), die einen Typ einer Übergabe (HO) charakterisiert, die durch ein Endgerät (11) des drahtlosen 5G-NR-Kommunikationssystems (10) von dem Quellknoten an den Zielknoten (13) des drahtlosen 5G-NR-Kommunikationssystems (10) durchgeführt wird, wobei der Typ einer der folgenden ist: eine Baseline-Übergabe, eine bedingte Übergabe, eine Dual-Active-Protocol-Stack-Übergabe oder eine Kombination aus bedingter und Dual-Active-Protocol-Stack-Übergabe;
Verwenden (554) der empfangenen Übergabeinformation (HO-I) zum Steuern eines Betriebs zumindest des Quellknotens (12), wobei das Verwenden (554) der empfangenen Übergabeinformation (HO-I) umfasst:
a) Zuordnen (554a) eines Mobilitätsausfallereignisses zu einem bestimmten durch die Übergabeinformation (HO-I) angegebenen Übergabetyp,
b) Anpassen (554b) von Mobilitätsparametern, die einem durch die Übergabeinformation (HO-I) angegebenen Übergabetyp zugeordnet sind; und
Übermitteln der Übergabeinformation an eine zentrale Entität des drahtlosen 5G-NR-Kommunikationssystems.

3. Zentrale Entität (14) für ein drahtloses 5G-NR-Kommunikationssystem (10), umfassend mindestens einen Prozessor und mindestens einen Speicher, der Anweisungen speichert, wobei der mindestens eine Speicher und die Anweisungen so konfiguriert sind, dass sie, mit dem mindestens einen Prozessor, die zentrale Entität des drahtlosen Kommunikationssystems veranlassen zum:
Empfangen einer Übergabeinformation (HO-I), die einen Typ einer Übergabe (HO) charakterisiert, die durch ein Endgerät (11) des drahtlosen 5G-NR-Kommunikationssystems (10) von einem Quellknoten an einen Zielknoten (13) des drahtlosen 5G-NR-Kommunikationssystems (10) durchgeführt wird, wobei der Typ einer der folgenden ist: eine Baseline-Übergabe, eine bedingte Übergabe, eine Dual-Active-Protocol-Stack-Übergabe oder eine Kombination aus bedingter und Dual-Active-Protocol-Stack-Übergabe;
Verwenden der empfangenen Übergabeinformation (HO-I), wobei das Verwenden der empfangenen Übergabeinformation (HO-I) Folgendes umfasst:
a) Zuordnen eines Mobilitätsausfallereignisses zu einem bestimmten durch die Übergabeinformation (HO-I) angegebenen Übergabetyp,
b) Anpassen von Mobilitätsparametern, die einem durch die Übergabeinformation (HO-I) angegebenen Übergabetyp zugeordnet sind.

## Revendications

1. Nœud cible (100, 13) pour un système de communication sans fil de nouvelle radio, NR, 5G (10), comprenant au moins un processeur (102) et au moins une mémoire (104) stockant des instructions (106), l'au moins une mémoire (104) et les instructions (106) étant configurées pour, avec l'au moins un processeur (102), amener ledit nœud cible (13 ; 13') du système de communication sans fil (10) à :
recevoir des informations de transfert intercellulaire d'un nœud supplémentaire, ledit nœud supplémentaire étant un nœud dudit système de communication sans fil NR 5G différent dudit nœud cible et auquel un équipement utilisateur se connecte après avoir rencontré une défaillance de liaison radio ;
estimer ou déterminer qu'une défaillance de liaison radio s'est produite ; et
transmettre (502 ; 612) à un nœud source (12) dudit système de communication sans fil NR 5G lesdites informations de transfert intercellulaire (HO-I) lors de ladite défaillance de liaison radio de l'équipement utilisateur qui s'est produite après un transfert intercellulaire dudit nœud source (12) audit nœud cible (13), lesdites informations de transfert intercellulaire caractérisant un type dudit transfert intercellulaire (HO) effectué par ledit équipement utilisateur (11) du système de communication sans fil NR 5G (10), ledit type étant un parmi : un transfert intercellulaire de base, un transfert intercellulaire conditionnel, un transfert intercellulaire à protocole actif double pile ou un transfert intercellulaire combiné conditionnel et à protocole actif double pile.

2. Nœud source (200, 12) pour un système de communication sans fil NR 5G (10) comprenant au moins processeur (202) et au moins une mémoire (204) stockant des instructions (206), l'au moins une mémoire (204) et les instructions (206) étant configurées pour, avec l'au moins un processeur (202), amener ledit nœud source (12) du système de communication sans fil (10) à :
recevoir (550) d'un nœud cible (13) des informations de transfert intercellulaire (HO-I) qui caractérisent un type d'un transfert intercellulaire (HO) effectué par un équipement utilisateur (11) du système de communication sans fil NR 5G (10) dudit nœud source au nœud cible (13) du système de communication sans fil NR 5G (10), ledit type étant un parmi : un transfert intercellulaire de base, un transfert intercellulaire conditionnel, un transfert intercellulaire à protocole actif double pile ou un transfert intercellulaire combiné conditionnel et à protocole actif double pile ;
utiliser (554) les informations de transfert intercellulaire (HO-I) reçues pour commander un fonctionnement d'au moins le nœud source (12), dans lequel l'utilisation (554) des informations de transfert intercellulaire (HO-I) reçues comprend ce qui suit :
a) associer (554a) un événement de défaillance de mobilité à un type de transfert intercellulaire spécifique indiqué par les informations de transfert intercellulaire (HO-I),
b) ajuster (554b) des paramètres de mobilité associés à un type de transfert intercellulaire indiqué par les informations de transfert intercellulaire (HO-I) ; et
transmettre lesdites informations de transfert intercellulaire à une entité centrale dudit système de communication sans fil NR 5G.

3. Entité centrale (14) pour un système de communication sans fil NR 5G (10) comprenant au moins un processeur et au moins une mémoire stockant des instructions, l'au moins une mémoire et les instructions étant configurées pour, avec l'au moins un processeur, amener ladite entité centrale du système de communication sans fil à :
recevoir des informations de transfert intercellulaire (HO-I) qui caractérisent un type d'un transfert intercellulaire (HO) effectué par un équipement utilisateur (11) du système de communication sans fil NR 5G (10) d'un nœud source à un nœud cible (13) du système de communication sans fil NR 5G (10), ledit type étant un parmi : un transfert intercellulaire de base, un transfert intercellulaire conditionnel, un transfert intercellulaire à protocole actif double pile ou un transfert intercellulaire combiné conditionnel et à protocole actif double pile ;
utiliser les informations de transfert intercellulaire (HO-I) reçues, dans laquelle l'utilisation des informations de transfert intercellulaire (HO-I) reçues comprend ce qui suit :
a) associer un événement de défaillance de mobilité à un type de transfert intercellulaire spécifique indiqué par les informations de transfert intercellulaire (HO-I),
b) ajuster des paramètres de mobilité associés à un type de transfert intercellulaire indiqué par les informations de transfert intercellulaire (HO-I).
